# EUROPEAN PATENT SPECIFICATION

(11) **EP 3 670 158 B1**
(45) Date of publication and mention of the grant of the patent: **28.12.2022**
(21) Application number: 19186923.9
(22) Date of filing: 18.07.2019
(51) Int. Cl.: B29C 70/22, B29C 70/42, B32B 1/08, B62K 19/16, B62K 19/20, B62K 3/04, B62K 21/02, B29K 101/12, B29L 31/30, B62K 19/22

(54) **METHOD FOR FORMING A BICYCLE FRAME COMPONENT MADE OF THERMOPLASTIC COMPOSITE LAMINATES AND THE BICYCLE FRAME FOR THE SAME**
VERFAHREN ZUR FORMUNG EINER FAHRRADRAHMENKOMPONENTE AUS THERMOPLASTISCHEN VERBUNDLAMINATEN UND FAHRRADRAHMEN DAFÜR
PROCÉDÉ DE FORMATION D'UN COMPOSANT DE CADRE DE BICYCLETTE CONSTITUÉ DE STRATIFIÉS COMPOSITES THERMOPLASTIQUES ET CADRE DE BICYCLETTE CORRESPONDANT

(30) Priority: 21.12.2018 TW 107146438
(43) Date of publication of application: 24.06.2020
(73) Proprietor: Astro Tech Co., Ltd., Changhua County (TW)
(72) Inventor: HU, Samuel, 500 Changhua City, Changhua Hsien (TW); LIU, Liu Cheng, 500 Changhua City, Changhua Hsien (TW)
(74) Representative: Casalonga

(56) References cited:
- WO-A2-98/54046
- TW-A- 201 416 287

## Description

### 1. Field of the Invention

The present invention relates to a method for forming a bicycle frame component, and more particularly to a method for forming a bicycle frame component made of thermoplastic composite.

### 2. Description of Related Art

Conventional methods for forming a bicycle frame component made of carbon reinforced composite as disclosed in CN1143010A, CN101786329A, and CN102729484A take a foam material or a bladder as a core. Then, carbon reinforced thermosetting composite laminates are laminated on the core to form a pre-structure. The pre-structure is placed into molds, is heated, is compressed, and hardens. The hardened pre-structure is removed from the molds, and the core within the hardened pre-structure is removed and demolded. Eventually, the hardened pre-structure is trimmed to complete a product of the bicycle frame.

However, the conventional methods are restricted by conditions of pressure and hardening temperature of thermosetting composite laminates and take 50 to 60 minutes to form a bicycle frame component. The conventional methods for forming a bicycle frame component made of carbon reinforced composite take lots of time and are not suitable for mass production.

In addition, the cores of the conventional methods for forming a bicycle frame provide poor or insufficient support, so the bicycle frame components manufactured by the conventional methods have uneven surfaces and the defect of unstable structural rigidity. Since the thermosetting composite laminates are irreversibly hardened during molding, the bicycle frame component made of thermosetting composite laminates cannot be repaired or recycled. The conventional methods for forming a bicycle frame component have many limits on performance and application.

In addition, document D1 (TW 201416287A) and document D2 (WO 98/54046A2) are relevant documents of bicycle frame components made of thermoplastic composites. Document D1 discloses a connector with a main body and a reinforcement member wrapped up by the main body. D2 discloses a bicycle frame component without laps made by a method comprising a fluid-removable core.

To overcome the shortcomings of the conventional methods for forming a bicycle frame component, the present invention provides a method for forming a bicycle frame component to mitigate or obviate the aforementioned problems.

The main objective of the present invention is to provide a method for forming a bicycle frame component that turns thermoplastic composite into a bicycle frame component by compression molding.

This problem is solved by a method for forming a bicycle frame component according to independent claim 1 and by a bicycle frame component made of thermoplastic composite according to independent claim 8. The dependent claims relate to advantageous embodiments.

In the present invention, the multiple shells are enclosed in molds for being heated and compressed. The molecules of the polymers of the multiple shells are diffused for connection of the multiple shells. The multiple shells are connected without applying additional adhesive or additional welding strips. The multiple shells are provided with sufficient connection. And the method for forming a bicycle frame component in accordance with the present invention is convenient and timesaving.

Other objects, advantages, and novel features of the invention will become more apparent from the following detailed description when taken in conjunction with the accompanying drawings.

### In the drawings

Fig. 1 shows perspective views of a first embodiment of a shell of a bicycle frame component in accordance with the present invention showing a thermoplastic composite laminate turned into the shell;
Fig. 2 is an exploded perspective view of two shells in Fig. 1 and a supporting unit for supporting the two shells;
Fig. 3 is an enlarged cross sectional side view of the two shells and the supporting unit in Fig. 2;
Fig. 4 is an enlarged cross sectional side view of the two shells and the supporting unit in Fig. 2 showing the two shells fused together after heating and compressing;
Fig. 5 is a perspective view of the first embodiment of the bicycle frame component in Fig. 1;
Fig. 6 is a cross sectional side view of a second embodiment of two shells and a supporting unit of a bicycle frame component in accordance with the present invention;
Fig. 7 is an exploded perspective view of a third embodiment of two shells in accordance with the present invention;
Fig. 8 is a perspective view of the bicycle frame component composed by the two shells in Fig. 7 showing the bicycle frame component connected with two dropouts;
Fig. 9 is an exploded perspective view of a fourth embodiment of a bicycle frame in accordance with the present invention showing the bicycle frame is composed by multiple shells; and
Fig. 10 is a perspective view of the bicycle frame in Fig. 9.

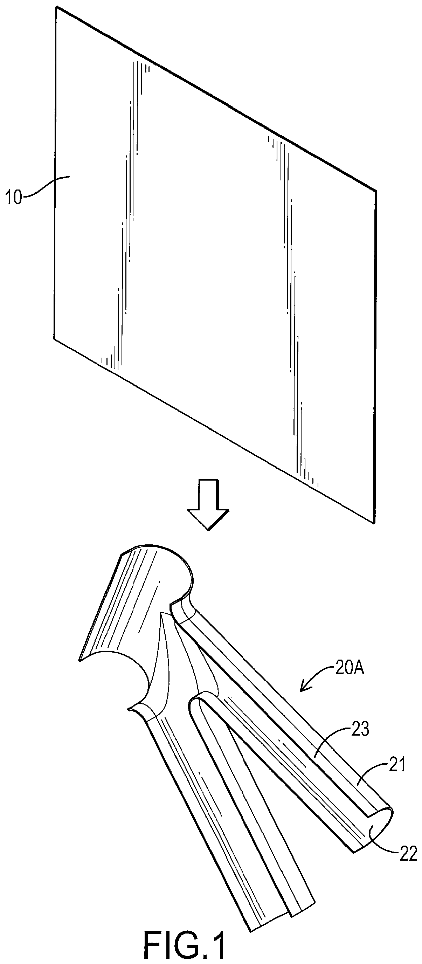

A method for forming a bicycle frame component 20 made of thermoplastic composite laminates 10 has a shell forming step, an overlapping step, a hot compressing connection step, and a supporting unit removal step. With reference to Figs. 1 to 5, a first embodiment is illustrated for manufacturing a bicycle component 20.

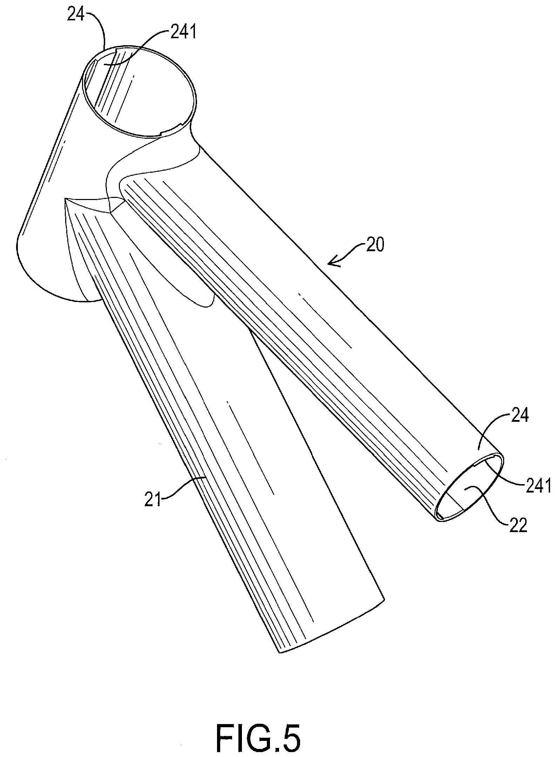

With reference to Figs. 1 and 5, the bicycle frame component 20 is composed of two shells 20A, 20B that are capable of being symmetrically assembled together. In the shell forming step, two thermoplastic composite laminates are turned into the two shells 20A, 20B by compression molding. Each one of the two composite laminates may be carbon fiber reinforced thermoplastic composite laminates or glass fiber reinforced thermoplastic composite laminates. In the shell forming step, each one of the two shells 20A, 20B may be manufactured by a complete thermoplastic composite laminate. Alternatively, the complete thermoplastic composite laminate may be cut according to the outline of molds for compression molding. After molding, the two shells 20A, 20B are trimmed to finish the two shells 20A, 20B.

Multiple layers of prepregs composed of a polymer matrix and multiple fibers are trimmed, are stacked up or placed in sequence, and then are compressed with heat and pressure. When the temperature of the polymer matrix rises above the glass transition temperature (Tg) of the polymer matrix, molecules of polymer matrix of each two layers of prepregs diffuse to connect the two layers of prepregs without applying additional adhesive. In the present invention, the polymer matrix is thermoplastic matrix, and the reinforcements of the prepregs may be implemented as carbon fibers, glass fibers, etc. The reinforcements of the prepregs may be woven fabrics or unidirectional fabrics. The numbers of layers of the prepregs and the orientation of each layer of the prepregs are decided according to thickness or function of product. In the shell forming step, the glass transition temperature (Tg) of the polymer matrix, which is the thermoplastic matrix, is about 150 °C (degree Celsius) to 190 °C (degree Celsius), the heating temperature of molds for compressing is about 220 °C (degree Celsius) to 300 °C (degree Celsius), and the pressurizing pressure is less than and equal to 1MPa.

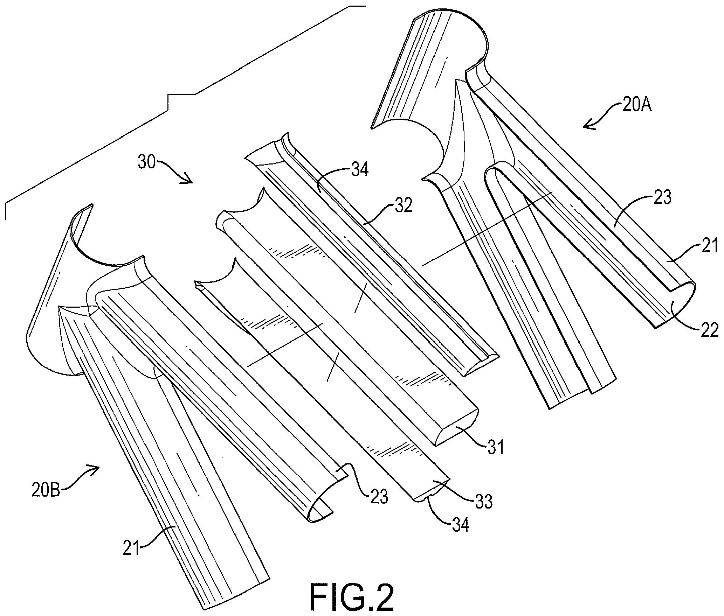

With reference to Fig. 2, each one of the two shells 20A, 20B has an exterior surface 21, a cavity 22 surrounded by the shell 20A, 20B, and multiple connecting margins 23. Each one of the multiple connecting margins 23 is configured to be connected to one corresponding connecting margin 23 of the other one of the two shells 20A, 20B. In order to make the two corresponding connecting margins 23 overlap, each one of the multiple connecting margins 23 has a width that is about 2.5 to 6 mm from the symmetric line of the bicycle frame component 20. Therefore, when the two corresponding connecting margins 23 of the two shells 20A, 20B are overlapped, an overlapping section of the two shells 20A, 20B has a width that is about 5 to 12 mm. In the present invention, the number of the shells of the bicycle frame 20 may be three or more. The shells are capable of being symmetrically assembled together, and the number of the shells is not limited in the present invention.

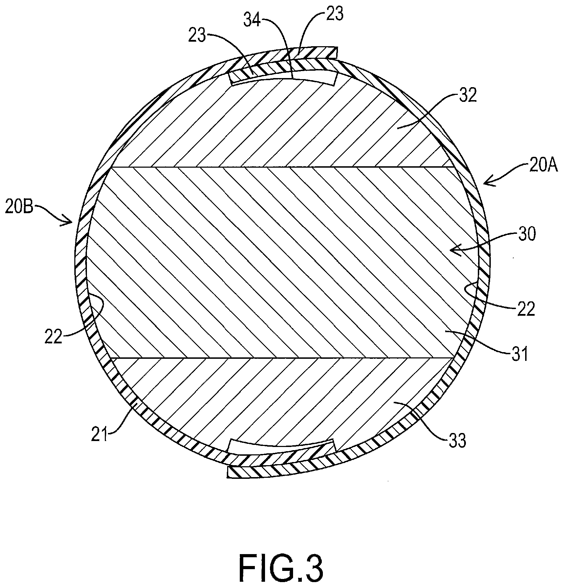

In the overlapping step: with reference to Figs. 2 and 3, the two shells 20A, 20B are symmetrically assembled with each other, and the two corresponding connecting margins 23 of the two shells 20A, 20B are overlapped. In the first embodiment, the two shells 20A, 20B have two overlapping sections, and the width of the overlapping sections of the two shells 20A, 20B is about 8 mm. In order to provide the two shells 20A, 20B with sufficient support during the subsequent compressing connection step, a supporting unit 30 is deployed within the two shells 20A, 20B in the overlapping step. The supporting unit 30 may be made of metal, foam, wax, or even an air bag for molding, etc. The form of the supporting unit 30 is not limited in the present invention. With reference to Fig. 2, the supporting unit 30 is made of metal and is composed of a middle supporting member 31, an upper supporting member 32, and a lower supporting member 33. The supporting unit 30 has two receiving recesses 34 corresponding to the two overlapping sections of the two shells 20A, 20B in number and position. In the first embodiment of the present invention, the two receiving recesses 34 are respectively defined in the upper supporting member 32 and the lower supporting member 33.

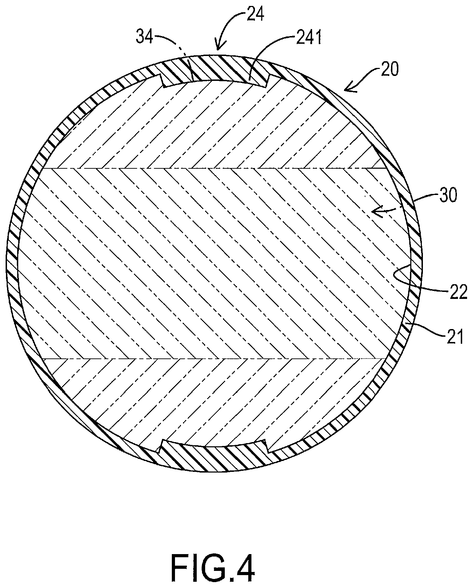

In the hot compressing connection step: with reference to Figs. 3 and 4, the two shells 20A, 20B are heated and compressed by compression molding to diffuse molecules of the polymers of the two shells 20A, 20B to turn the two overlapping sections into two fusion areas 24, and to connect the two shells 20A, 20B to form the bicycle frame component 20. In the present invention, the two shells 20A, 20B are enclosed in molds, are heated, and are compressed to diffuse molecules of the polymers of the two shells 20A, 20B. The two shells 20A, 20B are connected without applying additional adhesive and are provided with sufficient connection.

In the hot compressing connection step, the glass transition temperature (Tg) of the polymer matrix, which is the thermoplastic matrix, is about 150 °C (degree Celsius) to 190 °C (degree Celsius), the heating temperature of molds for compressing is about 240 °C (degree Celsius) to 300 °C (degree Celsius), and the pressurizing pressure is about 9 MPa to 25 MPa. After heating and compressing for 2 to 5 minutes, the pressure of the molds is maintained between 9 MPa and 25 MPa, and the molds are cooled down to less than and equal to 100 °C (degree Celsius). Then the bicycle frame component 20 is removed from the molds. In the first embodiment, each one of the two overlapping sections formed by the two corresponding connecting margins 23 of the two shells 20A, 20B is fused to flow into a corresponding one of the two receiving recesses 34, and is turned into a fused protrusion 241. The fused protrusion 241 of each one of the two fusion areas 24 has a thickness larger than a thickness of each one of the two shells 20A, 20B. The fused protrusions 241 of each one of the two fusion areas 24 with larger thickness enhances the rigidity of the fusion area 24 of the bicycle frame component 20.

In the supporting unit removal step: with reference to Figs. 4 and 5, after accomplishing the hot compressing connection step, the supporting unit 30 disposed within the bicycle frame component 20 is removed. In the first embodiment, the middle supporting member 32 is removed at first, and then the upper supporting member 32 and the lower supporting member 33 are removed in sequence. Then, the bicycle frame component 20 is trimmed to finish the bicycle frame component 20.

The method for forming the bicycle frame component 20 made of thermoplastic composite turns the thermoplastic composite laminates 10 into the two shells 20A, 20B by compression molding at first. Then, heat and compress the two shells 20A, 20B to fuse and to connect the two shells 20A, 20B. At last, the two shells 20A, 20B are connected and turned into the complete bicycle frame component 20. With the method in accordance with the present invention, the entire manufacturing process is quick and only takes about 5 minutes for molding. The conventional method for manufacturing bicycle frame components made of thermosetting composite takes 50 to 60 minutes for molding. Compared to the conventional method, the method in accordance with the present invention speeds up molding 10 times, saves labor, is suitable for mass production, and has profound industrial utility.

With reference to Figs. 2 and 5, the bicycle frame component 20 has the two shells 20A, 20B. The two shells 20A, 20B are made of thermoplastic composite by compression molding. The two shells 20A, 20B are symmetrically connected to each other. Each one of the two overlapping sections is fused and turns into one of two fused areas 24. The method in accordance with the present invention turns the thermoplastic composite into the two shells 20A, 20B. Then, heat and compress the two shells 20A, 20B and connect the two shells 20A, 20B accordingly. The method in accordance with the present invention stabilizes the quality of the bicycle frame component 20 and makes the bicycle frame component 20 have merits of lightweight and rigid structure. Since the thermoplastic composite can be repeatedly melted by heating and repeatedly hardened by cooling, the bicycle frame component 20 manufactured by the method in accordance with the present invention can be repaired and is recyclable and reusable. The bicycle frame component 20 manufactured by the method in accordance with the present invention is ecofriendly.

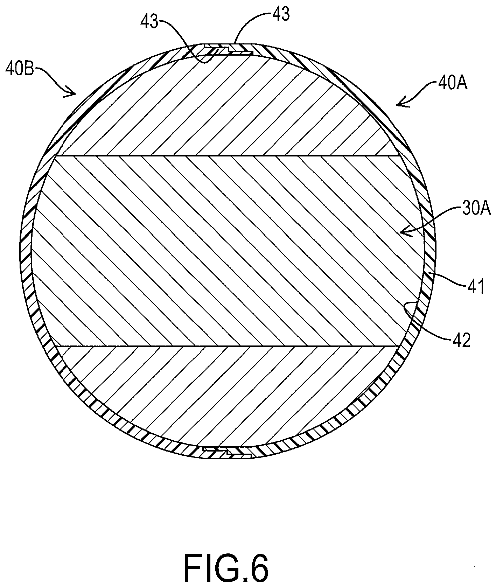

With reference to Fig. 6, in a second embodiment, the bicycle frame component has the two shells 40A, 40B. Each one of the two shells 40A, 40B has the exterior surface 41, the cavity 42, and two connecting margins 43. Each one of the two connecting margins 43 has a stepped structure. The two stepped structures of the two connecting margins 43 of one of the two shells 40A/40B structurally correspond to the two stepped structures of the two connecting margins 43 of the other one of the two shells 40B/40A. The two stepped structures of the two connecting margins 43 of one of the two shells 40A/40B respectively overlap the two stepped structures of the two connecting margins 43 of the other one of the two shells 40B/40A. In the second embodiment, the two receiving recesses of the supporting unit 30 are omitted. Each two corresponding connecting margins 43 of the multiple connecting margins 43 of the two shells 40A, 40B are heated, are compressed, and are fused together.

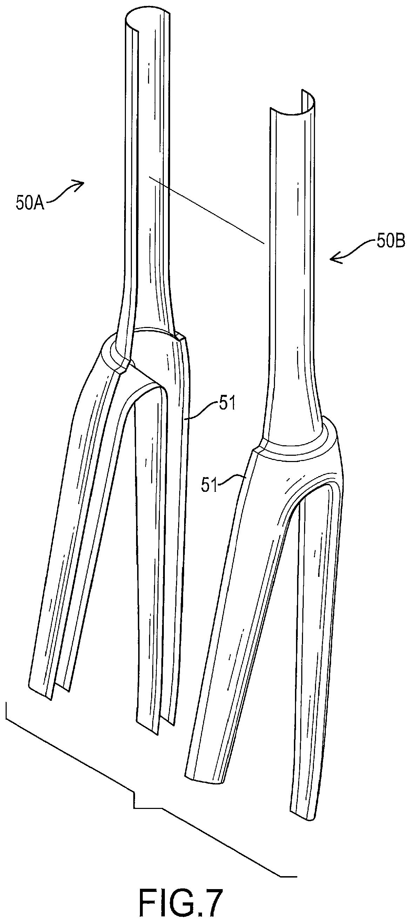

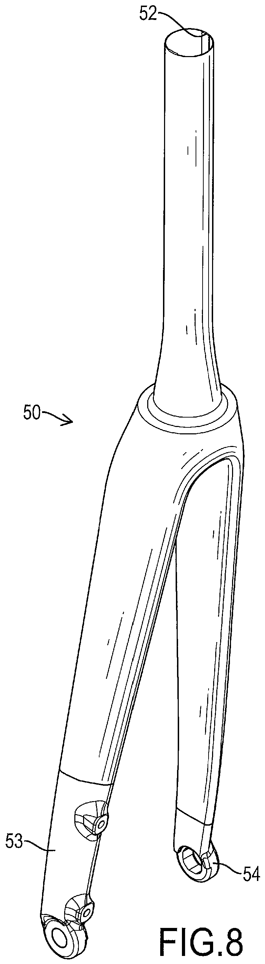

With reference to Figs. 7 and 8, a third embodiment in accordance with the present invention shows manufacturing a front fork of a bicycle. The bicycle frame component 50 is the front fork of the bicycle and is separated into two shells 50A, 50B capable of being symmetrically assembled together. The two shells 50A, 50B are oppositely separated toward the front side and the rear side in Fig. 7. Each one of the two shells 50A, 50B also has two connecting margins 51 for symmetrically assembling the two shells 50A, 50B. Each two corresponding connecting margins 51 of the two shells 50A, 50B are heated, are compressed, and are fused together to turn into a fused area 52. The bicycle frame component 50 is assembled with two dropouts 53, 54 to complete the front fork of the bicycle shown in Fig. 8.

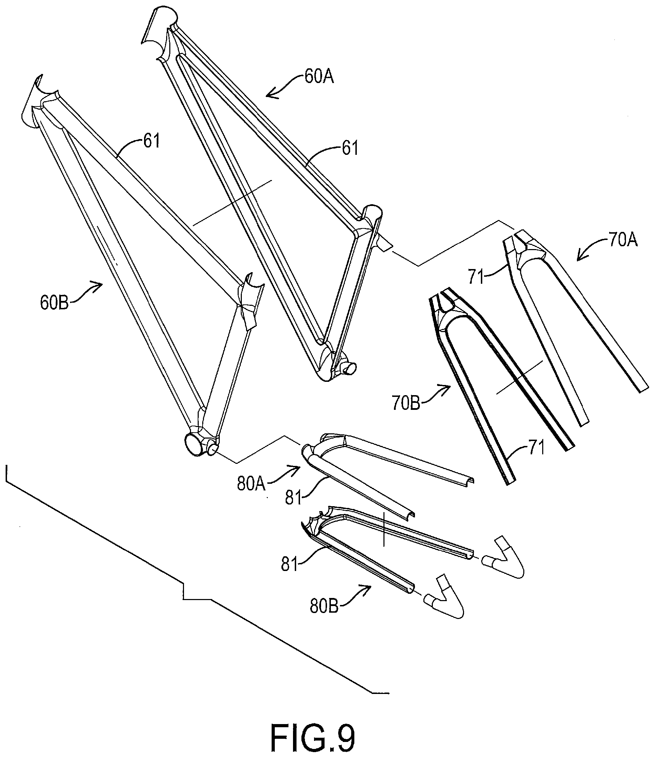

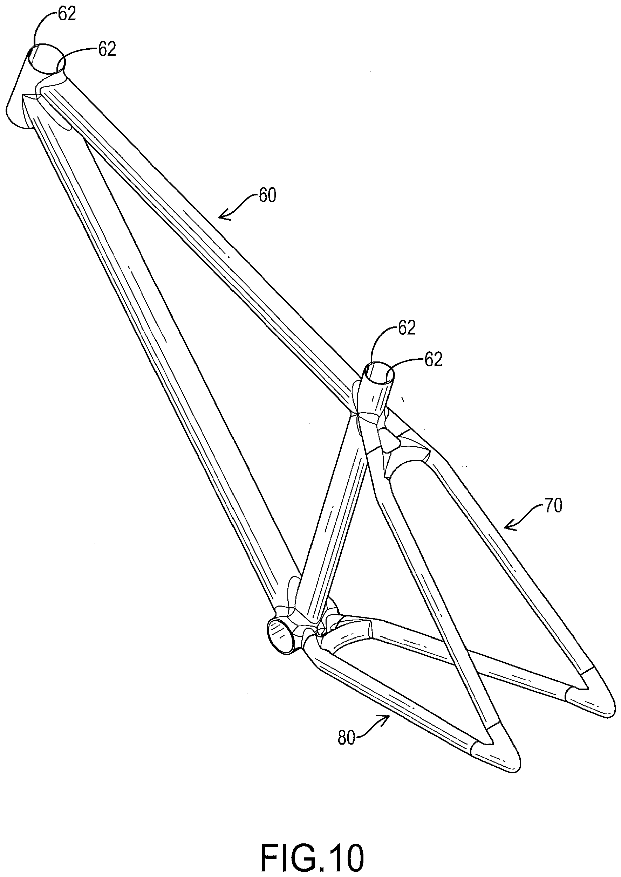

With reference to Figs. 9 and 10, a fourth embodiment in accordance with the present invention shows manufacturing of an entire bicycle frame. The bicycle frame is composed of a first bicycle frame component 60, a second bicycle frame component 70, and a third bicycle frame component 80. The first bicycle frame component 60 is a main triangular portion of the bicycle frame and is oppositely separated into two first shells 60A, 60B toward the left side and the right side in Fig. 9. And the two first shells 60A, 60B are capable of being symmetrically assembled together. The second bicycle frame 70 is a seat stay of the bicycle frame and is oppositely separated into two second shells 70A, 70B toward the upper side and the lower side in Fig. 9. The two second shells 70A, 70B are also capable of being symmetrically assembled together. The third bicycle frame 80 is a chain stay of the bicycle frame and is also oppositely separated into two second shells 80A, 80B toward the upper side and the lower side in Fig. 9. The two second shells 80A, 80B are capable of being symmetrically assembled together as well.

In the third embodiment, each one of the shells 60A, 60B, 70A, 70B, 80A, 80B has two connecting margins 61, 71, 81 configured to be symmetrically assembled. The connecting margins 61, 71, 81 facilitate the first shells 60A, 60B, the second shells 70A, 70B, and the third shells 80A, 80B to be heated, compressed, and fused together. With reference to Fig. 10, the connecting margins 61 of the first shells 60A, 60B are heated, are compressed, and are fused to turn into a fused area 62. Assemble the first bicycle component 60, the second bicycle component 70, and the third bicycle component 80 to complete the bicycle frame composed of the first bicycle component 60, the second bicycle component 70, and the third bicycle component 80.

## Claims

1. A method for forming a bicycle frame component (20) made of thermoplastic composite (10), **characterized in that** the method comprises:
a shell forming step: turning multiple thermoplastic composite laminates (10) into multiple shells (20A) that are capable of being symmetrically assembled together by compression molding, wherein
each one of the multiple shells (20A) has
an exterior surface (21);
a cavity (22) surrounded by the shell (20A); and
multiple connecting margins (23) having a width that is about 2,5 to 6 mm from a symmetric line of the bicycle frame component (20),
each one of the multiple connecting margins (23) configured to be connected to a corresponding one of the multiple connecting margins (23) of another one of the multiple shells (20A);
an overlapping step: overlapping two corresponding connecting margins (23) of each two of the multiple shells (20A) to form an overlapping section having a width that is about 5 to 12 mm of the two of the multiple shells (20A); and deploying a supporting unit (30) within the multiple shells (20A) to support each one of the multiple shells (20A);
a hot compressing connection step: heating and compressing the multiple overlapping sections of the multiple shells (20A) by compression molding to diffuse polymers of the multiple shells (20A), to turn the multiple overlapping sections into multiple fusion areas, and to connect the multiple shells (20A) to form the bicycle frame component (20); and
a supporting unit removal step: removing the supporting unit (30) disposed within the bicycle frame component (20) accompanied with trimming the bicycle frame component (20) to finish the bicycle frame component (20).

2. The method for forming a bicycle frame component (20) made of thermoplastic composite as claimed in claim 1, wherein the thermoplastic composite laminates (10) are carbon fiber reinforced thermoplastic composite laminates (10) or glass fiber reinforced thermoplastic composite laminates (10).

3. The method for forming a bicycle frame component (20) made of thermoplastic composite as claimed in claim 2, wherein the multiple shells are two shells (20A).

4. The method for forming a bicycle frame component (20) made of thermoplastic composite as claimed in any one of claims 1 to 3, wherein each one of the multiple fusion areas has a fused protrusion (241) with a thickness larger than a thickness of each one of the multiple shells (20A).

5. The method for forming a bicycle frame component (20) made of thermoplastic composite as claimed in claim 4, wherein
the supporting unit (30) has multiple receiving recesses (34) corresponding to the multiple overlapping sections in position;
each one of the multiple fusion areas forms a fused protrusion disposed within a corresponding one of the multiple receiving recesses (34) and corresponds to said corresponding receiving recess (34) in shape.

6. The method for forming a bicycle frame component (20) made of thermoplastic composite as claimed in claim 5, wherein the supporting unit (30, 30A) is made of metal and has a middle supporting member (31), an upper supporting member (32), and a lower supporting member (33).

7. The method for forming a bicycle frame component (20) made of thermoplastic composite as claimed in any one of claims 1 to 3, wherein
each one of the two corresponding connecting margins (23) has a stepped structure configured to be overlapped and engaging with the stepped structure of the other one of the two connecting margins (23); and
the two stepped structures of the two corresponding connecting margins (23) are overlapped and engaged with each other in the overlapping step.

8. A bicycle frame component (20) made of thermoplastic composite, **characterized in that** the bicycle frame component (20) comprises:
multiple shells (20A) manufactured by compression molding;
each one of the multiple shells (20A) having
an exterior surface (21);
a cavity (22) surrounded by the shell (20A); and
multiple connecting margins (23) having a width that is about 2,5 to 6 mm from a symmetric line of the bicycle frame component (20), each one of the multiple connecting margins (23) configured to be connected to a corresponding one of the multiple connecting margins (23) of another one of the multiple shells (20A), wherein
two corresponding connecting margins (23) of each two of the multiple shells (20A) are overlapped to form an overlapping section having a width that is about 5 to 12 mm and fused together by heating and are compressed to diffuse polymers of the two shells and to turn into a fusion area.

9. The bicycle frame component (20) made of thermoplastic composite as claimed in claim 8, wherein each one of the multiple fusion areas has a fused protrusion (241) with a thickness larger than a thickness of each one of the multiple shells (20A).

10. The bicycle frame component (20) made of thermoplastic composite as claimed in claims 8 or 9, wherein thermoplastic composite laminates (10) are carbon fiber reinforced thermoplastic composite laminates (10) or glass fiber reinforced thermoplastic composite laminates (10).

## Patentansprüche

1. Verfahren zur Formung einer Fahrradrahmenkomponente (20) aus thermoplastischem Verbundwerkstoff (10), **dadurch gekennzeichnet, dass** das Verfahren Folgendes umfasst:
einen Schalenformungsschritt: Umwandeln mehrerer thermoplastischer Verbundlaminate (10) in mehrere Schalen (20A), die durch Formpressen symmetrisch zusammengesetzt werden können, wobei
jede der mehreren Schalen (20A) Folgendes aufweist
eine äußere Oberfläche (21);
einen Hohlraum (22), der von der Schale (20A) umgeben ist; und
mehrere Verbindungsränder (23), die eine Breite aufweisen, die etwa 2,5 mm bis 6 mm ausgehend von einer Symmetrielinie der Fahrradrahmenkomponente (20) beträgt, wobei jeder der mehreren Verbindungsränder (23) dafür ausgelegt ist, mit einem entsprechenden der mehreren Verbindungsränder (23) von einer anderen der mehreren Schalen (20A) verbunden zu werden;
einen Überlappungsschritt: Überlappen von zwei entsprechenden Verbindungsrändern (23) von jeweils zwei der mehreren Schalen (20A), um einen Überlappungsabschnitt zu bilden, der eine Breite aufweist, die etwa 5 mm bis 12 mm der zwei der mehreren Schalen (20A) beträgt; und Einsetzen einer Stützeinheit (30) innerhalb der mehreren Schalen (20A), um jede der mehreren Schalen (20A) zu stützen;
einen Heißpressverbindungsschritt: Erwärmen und Pressen der mehreren überlappenden Abschnitte der mehreren Schalen (20A) durch Formpressen, um Polymere der mehreren Schalen (20A) auszubreiten, um die mehreren überlappenden Abschnitte in mehrere Verschmelzungsbereiche umzuwandeln, und um die mehreren Schalen (20A) so zu verbinden, dass sie die Fahrradrahmenkomponente (20) bilden; und
einen Stützeinheit-Entfernungsschritt: Entfernen der Stützeinheit (30), die innerhalb der Fahrradrahmenkomponente (20) angeordnet ist, begleitet von einem Trimmen der Fahrradrahmenkomponente (20), um die Fahrradrahmenkomponente (20) fertigzustellen.

2. Verfahren zur Formung einer Fahrradrahmenkomponente (20) aus thermoplastischem Verbundwerkstoff nach Anspruch 1, wobei die thermoplastischen Verbundlaminate (10) kohlenstofffaserverstärkte thermoplastische Verbundlaminate (10) oder glasfaserverstärkte thermoplastische Verbundlaminate (10) sind.

3. Verfahren zur Formung einer Fahrradrahmenkomponente (20) aus thermoplastischem Verbundwerkstoff nach Anspruch 2, wobei die mehreren Schalen zwei Schalen (20A) sind.

4. Verfahren zur Formung einer Fahrradrahmenkomponente (20) aus thermoplastischem Verbundwerkstoff nach einem der Ansprüche 1 bis 3, wobei jeder der mehreren Verschmelzungsbereiche einen verschmolzenen Vorsprung (241) mit einer Dicke aufweist, die größer als eine Dicke von jeder der mehreren Schalen (20A) ist.

5. Verfahren zur Formung einer Fahrradrahmenkomponente (20) aus thermoplastischem Verbundwerkstoff nach Anspruch 4, wobei
die Stützeinheit (30) mehrere Aufnahmeaussparungen (34) aufweist, die hinsichtlich ihrer Position den mehreren überlappenden Abschnitten entsprechen;
jeder der mehreren Verschmelzungsbereiche einen verschmolzenen Vorsprung bildet, der innerhalb einer der mehreren Aufnahmeaussparungen (34) angeordnet ist und hinsichtlich seiner Form der entsprechenden Aufnahmeaussparung (34) entspricht.

6. Verfahren zur Formung einer Fahrradrahmenkomponente (20) aus thermoplastischem Verbundwerkstoff nach Anspruch 5, wobei die Stützeinheit (30, 30A) aus Metall besteht und ein mittleres Stützelement (31), ein oberes Stützelement (32) und ein unteres Stützelement (33) aufweist.

7. Verfahren zur Bildung einer Fahrradrahmenkomponente (20) aus thermoplastischem Verbundwerkstoff nach einem der Ansprüche 1 bis 3, wobei
jeder der zwei entsprechenden Verbindungsränder (23) eine Stufenstruktur aufweist, die dafür ausgelegt ist, überlappt zu werden und mit der Stufenstruktur des anderen der zwei Verbindungsränder (23) in Eingriff zu kommen; und
die zwei Stufenstrukturen der zwei entsprechenden Verbindungsränder (23) in dem Überlappungsschritt miteinander überlappt und in Eingriff gebracht werden.

8. Fahrradrahmenkomponente (20) aus einem thermoplastischen Verbundwerkstoff, **dadurch gekennzeichnet, dass** die Fahrradrahmenkomponente (20) Folgendes umfasst:
mehrere Schalen (20A), die durch Formpressen hergestellt werden;
wobei jede der mehreren Schalen (20A) Folgendes aufweist
eine äußere Oberfläche (21);
einen Hohlraum (22), der von der Schale (20A) umgeben ist; und
mehrere Verbindungsränder (23), die eine Breite aufweisen, die etwa 2,5 mm bis 6 mm ausgehend von einer Symmetrielinie der Fahrradrahmenkomponente (20) beträgt, wobei jeder der mehreren Verbindungsränder (23) dafür ausgelegt ist, mit einem entsprechenden der mehreren Verbindungsränder (23) von einer anderen der mehreren Schalen (20A) verbunden zu werden, wobei
zwei entsprechende Verbindungsränder (23) von jeweils zwei der mehreren Schalen (20A) so überlappt werden, dass sie einen Überlappungsabschnitt bilden, der eine Breite aufweist, die etwa 5 bis 12 mm beträgt, und durch Erwärmen miteinander verschmolzen werden und gepresst werden, um Polymere der zwei Schalen auszubreiten, und in einen Verschmelzungsbereich umgewandelt werden.

9. Fahrradrahmenkomponente (20) aus thermoplastischem Verbundwerkstoff Anspruch 8, wobei jeder der mehreren Verschmelzungsbereiche einen verschmolzenen Vorsprung (241) mit einer Dicke aufweist, die größer als eine Dicke von jeder der mehreren Schalen (20A) ist.

10. Fahrradrahmenkomponente (20) aus thermoplastischem Verbundwerkstoff nach Anspruch 8 oder 9, wobei thermoplastische Verbundlaminate (10) kohlenstofffaserverstärkte thermoplastische Verbundlaminate (10) oder glasfaserverstärkte thermoplastische Verbundlaminate (10) sind.

## Revendications

1. Procédé de formation d'un composant de cadre de bicyclette (20) constitué de composite thermoplastique (10), **caractérisé en ce que** le procédé comprend :
une étape de formation de coques : une transformation de multiples stratifiés composites thermoplastiques (10) en multiples coques (20A) qui sont capables d'être symétriquement assemblées les unes aux autres par moulage par compression, dans lequel
chacune des multiples coques (20A) a
une surface extérieure (21) ;
une cavité (22) entourée par la coque (20A) ; et
de multiples marges de connexion (23) ayant une largeur qui est d'environ 2,5 à 6 mm à partir d'une ligne symétrique du composant de cadre de bicyclette (20), chacune des multiples marges de connexion (23) étant configurée pour être connectée à une marge de connexion correspondante des multiples marges de connexion (23) d'une autre des multiples coques (20A) ;
une étape de chevauchement : un chevauchement de deux marges de connexion (23) correspondantes de chacune des deux des multiples coques (20A) pour former une section de chevauchement ayant une largeur qui est d'environ 5 à 12 mm des deux des multiples coques (20A) ; et un déploiement d'une unité de support (30) à l'intérieur des multiples coques (20A) pour supporter chacune des multiples coques (20A) ;
une étape de connexion par compression à chaud : un chauffage et une compression des multiples sections de chevauchement des multiples coques (20A) par moulage par compression pour diffuser des polymères des multiples coques (20A), pour transformer les multiples sections de chevauchement en multiples zones de fusion, et pour connecter les multiples coques (20A) pour former le composant de cadre de bicyclette (20) ; et
une étape de retrait d'unité de support : un retrait de l'unité de support (30) disposée à l'intérieur du composant de cadre de bicyclette (20) accompagné d'un habillage du composant de cadre de bicyclette (20) pour finir le composant de cadre de bicyclette (20).

2. Procédé de formation d'un composant de cadre de bicyclette (20) constitué de composite thermoplastique selon la revendication 1, dans lequel les stratifiés composites thermoplastiques (10) sont des stratifiés composites thermoplastiques (10) renforcés par des fibres de carbone ou des stratifiés composites thermoplastiques (10) renforcés par des fibres de verre.

3. Procédé de formation d'un composant de cadre de bicyclette (20) constitué de composite thermoplastique selon la revendication 2, dans lequel les multiples coques sont deux coques (20A).

4. Procédé de formation d'un composant de cadre de bicyclette (20) constitué de composite thermoplastique selon l'une quelconque des revendications 1 à 3, dans lequel chacune des multiples zones de fusion a une saillie fusionnée (241) avec une épaisseur supérieure à une épaisseur de chacune des multiples coques (20A).

5. Procédé de formation d'un composant de cadre de bicyclette (20) constitué de composite thermoplastique selon la revendication 4, dans lequel
l'unité de support (30) a de multiples évidements de réception (34) correspondant aux multiples sections de chevauchement en position ;
chacune des multiples zones de fusion forme une saillie fusionnée disposée à l'intérieur d'un évidement de réception correspondant des multiples évidements de réception (34) et correspond audit évidement de réception (34) correspondant en forme.

6. Procédé de formation d'un composant de cadre de bicyclette (20) constitué de composite thermoplastique selon la revendication 5, dans lequel l'unité de support (30, 30A) est constituée de métal et a un élément de support intermédiaire (31), un élément de support supérieur (32), et un élément de support inférieur (33).

7. Procédé de formation d'un composant de cadre de bicyclette (20) constitué de composite thermoplastique selon l'une quelconque des revendications 1 à 3, dans lequel
chacune des deux marges de connexion (23) correspondantes a une structure étagée configurée pour être chevauchée et en prise avec la structure étagée de l'autre des deux marges de connexion (23) ; et
les deux structures étagées des deux marges de connexion (23) correspondantes sont chevauchées et en prise l'une avec l'autre dans l'étape de chevauchement.

8. Composant de cadre de bicyclette (20) constitué de composite thermoplastique, **caractérisé en ce que** le composant de cadre de bicyclette (20) comprend :
de multiples coques (20A) fabriquées par moulage par compression ;
chacune des multiples coques (20A) ayant
une surface extérieure (21) ;
une cavité (22) entourée par la coque (20A) ; et
de multiples marges de connexion (23) ayant une largeur qui est d'environ 2,5 à 6 mm à partir d'une ligne symétrique du composant de cadre de bicyclette (20), chacune des multiples marges de connexion (23) étant configurée pour être connectée à une marge de connexion correspondante des multiples marges de connexion (23) d'une autre coque des multiples coques (20A), dans lequel deux marges de connexion (23) correspondantes de chacune des multiples coques (20A) sont chevauchées pour former une section de chevauchement ayant une largeur qui est d'environ 5 à 12 mm et fusionnées ensemble par chauffage et sont comprimées pour diffuser des polymères des deux coques et pour se transformer en une zone de fusion.

9. Composant de cadre de bicyclette (20) constitué de composite thermoplastique selon la revendication 8, dans lequel chacune des multiples zones de fusion a une saillie fusionnée (241) avec une épaisseur supérieure à celle de chacune des multiples coques (20A).

10. Composant de cadre de bicyclette (20) constitué de composite thermoplastique selon la revendication 8 ou 9, dans lequel des stratifiés composites thermoplastiques (10) sont des stratifiés composites thermoplastiques (10) renforcés par des fibres de carbone ou des stratifiés composites thermoplastiques (10) renforcés par des fibres de verre.
